# EUROPEAN PATENT APPLICATION

(11) **EP 4 595 833 A1**
(43) Date of publication of application: **06.08.2025**
(21) Application number: 23794121.6
(22) Date of filing: 27.09.2023
(51) Int. Cl.: A47J 31/36

(54) **CARTRIDGE FOR SUPPLYING INDIVIDUAL PORTIONS AND DRINKS PREPARATION SYSTEM USING SAID CARTRIDGE**

(30) Priority: 27.09.2022 PT 2022118220
(71) Applicant: Novadelta - Comércio e Indústria de Cafés, Unipessoal, Lda., 1950-041 Lisboa (PT)
(72) Inventor: NABEIRO, Rui Miguel, 7370-112 Campo Maior (PT); DE FIGUEIREDO BRANCO, João André, 1885-091 MOSCAVIDE (PT)
(74) Representative: Patentree
(86) International application number: PCT/PT2023/050033
(87) International publication number: WO 2024/072247

(57) **Abstract**

The present invention refers to a cartridge (3) that comprises a support (1) of individual portions, provided as a flexible support of strip type or similar, presenting a plurality of individual portions (2) of an edible substance, such as for example coffee. In particular, the cartridge (3) according to the present invention is adapted so that provides a greater storage capacity of individual portions (13) inside thereof and further provides a more efficient and reliable movement of said support (12) of individual portions out of the cartridge casing (31).

The present invention further refers to a beverage preparation system comprising at least one type of beverage preparation machine (10) adapted for use of at least one type of cartridge (3) and adapted so that can provide a high storage capacity of individual portions (2).

## Description

### Field of the invention

The present invention refers to the field of cartridges adapted for collection of a support of individual portions, provided as an elongated and flexible support of strip type or similar, presenting a plurality of individual portions of an edible substance that is a beverage precursor.

The present invention further refers to a beverage preparation system adapted for using a cartridge of supply of a plurality of individual portions.

### Background of the invention

The prior art includes several solutions relating to beverage preparation machines based upon individual portions of an edible substance, and configured so that can process a support of strip type or similar, that presents a plurality of successive packages of individual portions and configured so that can be displaced so as to supply an extraction device adapted so that can extract a beverage from each individual portion.

Documents US 3,143,954 and US 3,213,777 disclose beverage preparation machines according to the type of the present invention, and that present an actuation device configured for moving a strip presenting a plurality of individual portions successively to an extraction device. These documents do not disclose solutions for the disposition of said strip of individual portions inside of a respective package.

Documents GB 2266228 A and GB 2288972 A disclose a beverage preparation system that includes a strip of individual portions that is produced in a non-absorbing plastic material and collected inside a package provided in an air-sealing material, such as a laminated construction that incorporates aluminium or plastic sheet. The strip can be collected in a disposition in a zigzag shape inside a cartridge casing of parallelepiped shape and that can be removed from the casing through an opening on a frontal face and that presents flexible lips adapted so as to reduce air and humidity entry.

Document DE 4324468 C1 discloses a strip of individual portions of ground coffee. Said strip is configured so that the individual portions extend on only one side relative to the support alignment. Similarly to the previous document, also in this case the strip is collected inside a disposition of zigzag type inside of a cartridge casing that presents an exit opening disposed on the corner region between frontal and top faces thereof. Said cartridge casing is also provided air sealed, is filled up with a gas that is heavier than ambient air and presents auxiliar means for displacement of the strip out thereof.

Document WO 97/17006 relates to a beverage preparation system of the type of the present invention, including a cartridge of individual portions that can be operatively associated with a beverage preparation machine. The cartridge can collect a support of individual portions in a zigzag disposition, with a plurality of sets of individual portions disposed horizontally and an exit opening that seems to extend along the entire top face of the cartridge casing.

Document WO 02/100225 A1 seems to propose a package with a similar disposition of the support of individual portions inside thereof.

Document GB 2266228 discloses a machine of the same type adapted so that can operate means of storage of individual portions. The document discloses two types of dispositions of the support of the individual portions, including in form of roll in a package with a shape of cylindric drum, or in a harmonium shape inside a package of parallelepiped shape. The package presents a parallelepiped shape and includes a disposition of the support of individual portions similar to the one advanced by the document WO 97/17006.

Document WO 2013/169134 A2 filed by the author of the present invention, discloses a beverage preparation machine of the same type and adapted for processing a support of portions that provides a substantially hermetic envelope to a plurality of individual portions.

Documents WO 2016/130034 A1 and WO 2016/130035 A1 also filed by the author, further disclose particular features of packages of the type of the present invention.

None of the documents in the prior art discloses a solution for a more efficient disposition of the support of individual portions inside a respective package, in particular so as to improve the efficiency of traction thereof and, simultaneously, so as to enable packaging of a greater number of individual portions in a given packaging volume.

### General description of the invention

The objective of the present invention is to provide a cartridge for collection of a portions support of strip type or similar, comprising a plurality of individual portions of edible substance, whereby said cartridge is configured so that provides better usage of the collection volume confined by the cartridge casing, more efficient operating conditions, including smaller number of cartridge replacements and further an efficient and reliable movement of traction of the portions support out of the cartridge casing.

This objective is attained according to the present invention by means of a cartridge according to claim 1 and the invention is defined by claim 1.

In particular, the cartridge according to the invention comprises a portions support of elongated and flexible format that presents at least 50 collection confinement distanced from each other by a step that is equal or bigger than the characteristic dimension of the collection confinements.

It is preferred when the cartridge comprises a portions support that presents a plurality of individual portions of edible substance, in particular in the form of compacted coffee tablet, and provided so that the volume of the individual portions of edible substance is at least 40%, preferentially at least 50% of the interior volume of the cartridge casing.

Moreover, it is advantageous when the cartridge casing and portions support are configured so that the free spaces between collection confinements present a volume that is smaller than the volume of the collection confinements, preferentially smaller than half the volume thereof.

It is herewith provided a more compact disposition of the individual portions of edible substance inside the cartridge casing.

The cartridge casing advantageously presents a parallelepiped shape and is configured so that can collect a portions support presenting a plurality of collection confinements presenting a general disc like shape with a height smaller than the characteristic transversal dimension, in particular a disc type of circular transversal section.

The supply cartridge is configured so that can be operatively associated with a beverage preparation machine, such as for example of expresso type coffee, tea and similar, notably by means of extraction or infusion of aromatic substances provided in individual portions and packaged in collection confinements of the portions support.

Another objective of the present invention is to provide a beverage preparation system, such as expresso type coffee and similar, comprising at least one, preferentially at least two types of cartridge comprising an elongated and flexible portions support presenting a plurality of collection confinements of individual portions, and further comprising at least one type of beverage preparation machine, configured so that the system provides a better use of the collection volume provided by the cartridge casing, better operation conditions, including smaller number of cartridge replacements, and further an efficient and reliable movement of traction of the portions support out of the cartridge casing.

This objective is solved according to the present invention by means of a beverage preparation system according to claim 15.

The system according to the present invention can include a cartridge according to any of claims 1 to 14.

In particular, the system includes a machine comprising a collection disposition inside of the machine casing for operative association of the cartridge, preferentially including retention thereof, and the system is configured so that both longitudinal lateral walls of the cartridge casing result in the proximity of the longitudinal lateral walls of a collection disposition confined by the casing of the machine.

### Description of the Figures

The invention shall be hereinafter explained in greater detail based upon the preferred embodiments and upon the attached Figures.

The Figures show, in simplified schematic representations:
- Figure 1:: schematic diagram of a beverage preparation system according to the prior art;
- Figure 2:: side cut view of a cartridge according to the prior art;
- Figure 3:: top and side cut views of a portions support (1) comprised in a cartridge (3) according to the invention;
- Figure 4:: side cut view of part of a portions support comprised in a cartridge (3) according to the invention;
- Figure 5:: side cut and top views of a first embodiment of a cartridge (3) ;
- Figure 6:: side cut views of a second embodiment of a cartridge (3) ;
- Figure 7:: side cut and top views of a third embodiment of a cartridge (3) ;
- Figure 8:: side cut views of a fourth embodiment of a cartridge (3) ;
- Figure 9:: perspective views of two types of cartridges (3, 3');
- figure 10:: top cut view of sections of a cartridge (3) according to the invention;
- Figure 11:: side cut views of a first embodiment of a system according to the invention;
- Figure 12:: side cut views of a second embodiment of a system according to the invention.

### Description of preferred embodiments of the invention

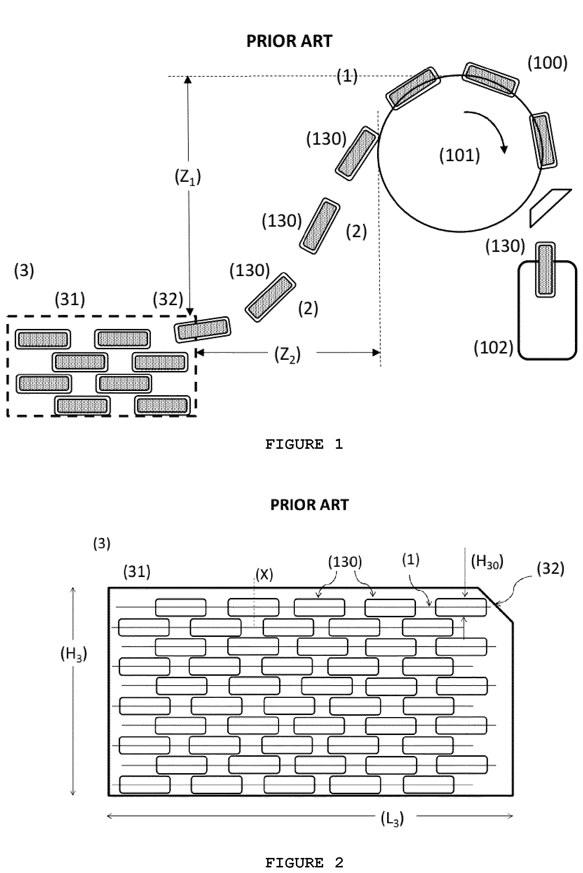

As known in prior art and represented in merely schematic manner in **Figures 1** and **2****,** a cartridge (3) can be part of a system for preparing edible products, for example coffee-based beverages, such as coffee of the espresso type.

A cartridge (3) of the present invention comprised a cartridge casing (31) configured so that can collect a portions support (1) comprising a plurality of collection confinements (130) that confine an individual portion (2) of edible substance for preparing a beverage.

The cartridge (3) is configured so that can be operatively associated with a beverage preparation machine (100). In particular, the cartridge (3) can be disposed so that a downstream edge of the portions support (1) can be engaged on a traction device (101) of the machine (100) and is conducted to a beverage preparation device (102) that ca be an extraction device of coffee of espresso type and similar beverages.

The portions support (1) includes a plurality of collection portions (13) that present a collection confinement (130) configured so that can collect an individual portion (2) of edible substance inside thereof.

According to a solution of the prior art, the system can be configured so that a collection portion (13) furthest downstream is separated from the remaining portions support (1) upstream of the extraction device (102).

The cartridge casing (31) presents a general shape of parallelepiped type, so that can collect a portion support (1) in a disposition whereby it is folded in successive row segments in zigzag arrangement along the height (H₃) of the cartridge casing (31). The furthest downstream edge of the portions support (1) is disposed in the proximity of the exit opening (32) of the cartridge casing (31), and the exit opening (32) is provided on a corner region of the cartridge casing (31), such as for example in a corner region including part of at least one of the top wall and frontal wall of the cartridge casing (31).

Several possibilities are known for arranging the portions support (1) inside the cartridge casing (31) including so that collection confinements (130), or respective central axis (X), of successive rows segments are unaligned in alternated manner relative to those of a following row and aligned with those of a second row upstream and/or downstream thereof, as schematically represented in Figure 2.

As the reader shall promptly understand and considering the dimensions of a collection confinement (130), the dimensions and number of individual portions (2) contained in a given total collection volume of the cartridge casing (31) are parameters that determine the dimensions of the cartridge (3) and the required frequency of replacement, and the ease of handling thereof by a user of the beverage preparation system, as well as transport and storage costs.

Moreover, the length (L₃) and height (H₃) of the cartridge casing (31) are parameters that can determine the dimension of the machine (100).

The present description hereinafter addresses aspects of a cartridge (3) according to the present invention.

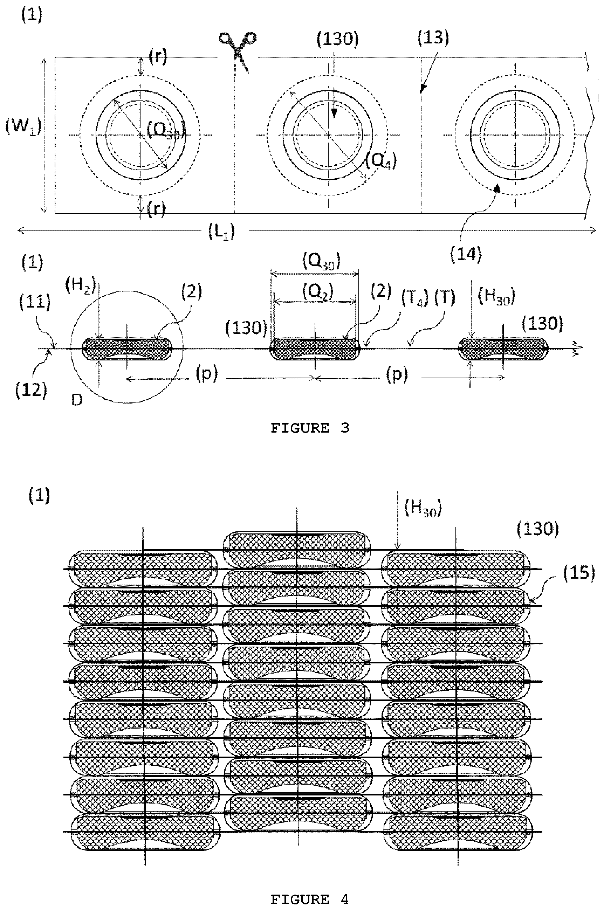

**Figures 3** and **4** include views of a segment of portions support (1) and of part of the portions support (1) collected inside a cartridge casing (31), respectively.

The portions support (1) comprises two support sheets (11, 12) united in juxtaposition along a connection plane (Y) so that forms a plurality of collection portions (13). The collection portions (13) comprise a respective collection confinement (130) that presents a characteristic transversal collection dimension (Q30) and a collection height (H₃₀) configured so that confines the individual portion (2).

The collection confinements (130) are configured so that can confine individual portions (2) presenting a quantity comprised between 5 and 7 g of edible substance precursor of beverage.

The collection confinements (130) can present a symmetric form relative to a central symmetry axis (X) and/or relative to the connection plane (Y), including superior and inferior hemispherical parts of at least approximately equal shape and dimension so that each correspond to half the collection height (H₃₀) and of the collection volume.

According to one aspect, the collection confinements (130) present a ratio between the characteristic collection dimension (Q₃₀) and the collection height (H₃₀) comprised between 3.0:1 and 6.0:1, preferentially between 3.5:1 and 5.0:1, whereby the characteristic collection dimension (Q₃₀) is preferentially comprised between 30 and 45 mm, particularly preferentially between 35 and 40 mm. Moreover, the collection confinements (130) present two mutually opposing plane surfaces that present an extension of at least 70%, preferentially at least 80% of the characteristic collection dimension (Q₃₀).

The combination of these two parameters configures a format of collection confinements (130) that advantageously provides greater stability of the portions support (1) inside of the cartridge (31).

The individual portion (2) comprises roast and ground coffee beans, preferentially at least most part of the fraction in mass thereof, or other edible substance for preparing beverages by means of percolation or extraction thereof.

The individual portion (2) is advantageously provided in shape of a previously compacted tablet of and edible substance, for example roast and ground coffee beans.

The compacted tablet (2) can present a general shape of disc type, with a characteristic transversal dimension (Q₂), for example its exterior diameter, and a height (H₂), whereby the characteristic transversal dimension (Q₂) of the compacted tablet (2) is bigger than the height (H₂) thereof.

It is advantageous when the individual portion (2) presents a transversal portion dimension (Q₂) that is comprised between 30 and 50 mm, preferentially between 30 and 40 mm.

The individual portion (2) can present a ratio between the characteristic portion dimension (Q₂) and the height (H₂) comprised between 2.5:1 and 4.5:1, preferentially between 3.0:1 and 4.0:1, whereby the height (H₂) is preferentially comprised between 5 and 25 mm, preferentially between 7 and 15 mm, whereby the height (H₂) of the individual portions (2) is preferentially comprised between 5 and 25 mm, particularly preferentially between 7 and 15 mm.

The collection confinements (130) can be configured so that can hermetically confine individual portions (2), that is, in sealed manner to exterior gas, or in non-hermetical rather in permeable manner to the passage of fluids, but not enabling passageway of particles of dimension bigger than 0,1 mm, preferentially not bigger than 0,05 mm.

It is preferred when the portions support (1) is provided so that the collection confinements (130) present a characteristic collection dimension (Q₃) comprised between 30 and 45 mm, preferentially between 35 and 40 mm.

It is preferred when the portions support (1) is provided so that the collection confinements (130) present a ratio between the transversal collection dimension (Q₃₀) and the transversal portion dimension (Q₂) comprised between 1.02:1 and 1.12:1, preferentially between 1.04:1 and 1.10:1.

The portions support (1) is provided so that the collection confinements (130) present top and base regions configured for flow entry and exit of at least approximately equal shape and dimension and of planar format parallel to the connection plane (Y), whereby the ratio between the area of the collection confinements (130) in the connection plane (Y) and the projection of the area of the top and base regions upon the connection plane (Y) is comprised between 1.20:1 and 1.40:1, preferentially between 1.25:1 and 1.35:1, so that are supported by the greater structural resistance provided by the configuration of the lateral wall (15) and the distance relative thereto.

The portions support (1) is provided so that the collection confinements (130) present a lateral wall (15) of curved form when seen in side view, whereby at least most part of the extension of the lateral wall (15) present the form of a segment of circumference with a radius comprised between 3 and 6 mm, preferentially between 3,5 and 5,5 mm.

The height (H₃₀) of the collection confinements (130) is therefore comprised between 6 and 16 mm, preferentially between 7 and 12 mm. Applicant experimentally determined that this dimension provides good results in terms of coffee extraction and provided greater stability of the portions support (1) inside the cartridge casing (31).

Moreover, the collection portions (13) include connection regions (14) of annular shape that extend radially with a characteristic transversal connection dimension (Q₄) from the lateral wall (15) of the collection confinement (130), whereby the connection regions (14) do not extend neither along the entire free distance (q) between successive collection confinements (130) nor along a width (r) of free lateral margins of the portions support (1).

It is preferred when the portions support (1) is provided so that the ratio between the area of connection surface of the connection regions (14) and the area of the collection confinements (130) on the connection plane (Y) is comprised between **1.5:1** and 5.0:1, preferentially between **2.0:1** and **3.0:1,** so that the connection region (14) presents a sufficient material connection surface in relation to the characteristic dimension of the collection confinements (130).

The connection regions (14) are configured so that provide a thickness (T₄) bigger than the thickness (T₁) of other regions of the portions support (1) between successive collection confinements (130).

The connection regions (14) are configured so that provide a bigger resistance to flexion and/or rigidity than other regions of the portions support (1) between successive collection confinements (130).

The collection portions (13) are provided so that the collection confinements (130) present a top wall and a base wall with a characteristic transversal dimension (Q₃₀ᵢ) that is surrounded by a lateral wall (15) with curved shape, including a bigger part with the form of an arch of circumference, and the connection region (14).

Accordingly to a particular advantageous aspect, the portions support (1) presents connection regions (14) configured so that provides flexion in the perimeter region of the collection confinements (130) and on a region between connection regions (14) of successive collection confinements (130), so that there is provided a more compact disposition of the collection confinements (130) inside of a cartridge casing (31) and, therefore, smaller relative dimensions thereof in respect of a given number of collection confinements (130).

As further represented in **Figures 3** and **4****,** the cartridge (3) comprises a portions support (1) that presents certain features and dimensional relations that favour the collection and operation thereof.

The portions support (1) presents a support extension (L₁) with a first edge disposed next to the exit opening (32) and provided so that can circulate through the latter.

The portions support (1) is disposed inside the cartridge casing (31) folded in zigzag in successive segments rows that extend along a direction transversal to the gravity force and disposed ones upon the others along a height, and so that the collection confinements (130) of a row are vertically intercalated between the collection confinements (130) of the row directly above and/or below.

The portions support (1) presents collection confinements (130) with base and top regions presenting mutually opposing plane surfaces that extend along at least 70%, preferentially at least 80% of the characteristic collection dimension (Q₃₀) of the collection confinements (130).

The portions support (1) presents connection regions (14) of annular format that extend from the perimeter of the collection confinements (130) and along a fraction comprised between 0,20 and 0,50, preferentially between 0,25 and 0,40, of the extension of the free distance (q) between successive collection confinements (130), whereby the connection regions (14) are configured so that provide continuous material connection between support sheets (11, 12) and greater resistance to deflection.

The portions support (1) presents connection regions (14) of annular format and with a ratio between the characteristic connection dimension (Q₄) and the projection on the connection plane (Y) of the extension of the collection confinements (130) between lateral walls (15) thereof that is comprised between 1.5:1 and 2.5.:1, preferentially between 1.7:1 and 2.2:1, whereby the collection walls (15) present a curvature with a radius comprised between 3 and 6 mm, preferentially between 3,5 and 5,5 mm along at least most part of their extension.

According to one aspect of the present invention, the portions support (1) presents collection confinements (130) at a free distance (q) between each other that is bigger than the characteristic collection dimension (Q30) of the collection confinements (130).
it is preferred when the portions support (1) presents collection confinements (130) disposed according to a ratio between the step distance (p) and the free distance (q) comprised between 2.01:1 and 2.20:1, preferentially between 2.05:1 and 2.15:1.

It is preferred when the portions support (1) presents a step (p) comprised between 70 and 90 mm, preferentially between 75 and 85 mm.

**Figure 4** represents part of the disposition of a portions support (1) such as this can be carried out according to the invention inside of a cartridge casing (31).

According to one aspect of the present invention, the cartridge (3) comprises a portions support (1) disposed so that the height occupied by three successive folded rows is equal or smaller than 2,5 times the height (H₃₀) of the collection confinements (130).

Moreover, it is preferred when the height occupied by three successive folded rows at least approximately corresponds to two times the height (H₃₀) of the collection confinements (130).

According to a second aspect, the cartridge casing (31) collections a portions support (1) that presents collection confinements (130) distanced from each other by a step (p) that is equal or bigger than the characteristic dimension (Q₃₀) of the collection confinements (130).

It is herewith provided a more compact disposition of the collection portions (13) in the cartridge casing (31), with less empty spaces between collection confinements (130) of row segments in a zigzag disposition.

It is herewith advantageously provided that collection confinements (130) of one row are intercalated between collection confinements (130) of a row underneath thereof, in particular so that at least most part, preferentially the totality of the extension of an inferior half portion of the collection confinement (130), that is, at least approximately corresponds to half the height (H₃₀) of the collection confinements (130), is collected in the projection space between the superior half portions of collection confinements (130) of a row underneath.

The cartridge (3) comprises a portions support (1) disposed so that the most part of the collection confinements (130) is collected alternately in the space between collection confinements (130) of rows directly above and underneath thereof, whereby the collection confinements (130) preferentially present a ratio between characteristic collection dimension (Q₃₀) and collection height (H₃₀) comprised between 3.0:1 and 6.0:1, preferentially between 3.5:1 and 5.0:1.

It has been demonstrated as advantageous when the cartridge (3) comprises a portions support (1) disposed so that the lateral walls (15) of neighbouring vertical alignments of collection confinements (130) result laterally aligned in extensions of half the collection height (H₃₀) of the collection confinements (130) and, moreover, result adjacent and so that do not support each other laterally, or at a distance smaller than half the collection height (H₃₀) of the collection confinements (130).

Moreover, the cartridge (3) comprises a portions support (1) disposed so that forms vertical alignments whereby the base regions of collection confinements (130) of one row sit directly upon the top regions of collection confinements (130) of another row, preferentially along at least most part of the characteristic collection dimension (Q₃₀) thereof.

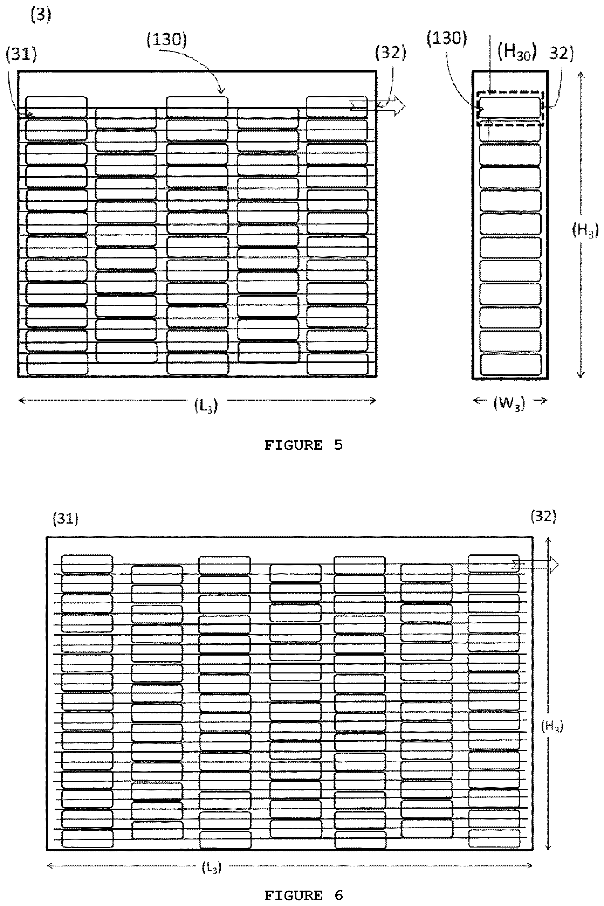

**Figures 5** and **6** represent two preferred embodiments of a cartridge (3) according to the present invention.

According to one aspect of the invention, the cartridge casing (31) can collect a portions support (1) presenting at least 50, preferentially between 50 and 200 collection confinements (130), particularly preferentially between 60 and 120 collection confinements (130).

According to one other aspect of the invention, individual portions (2) collected in collection confinements (130) distanced from each other by a step (p) that is equal or bigger than the characteristic dimension (Q₃₀) of the collection confinements (130).

The combination of the two aforementioned aspects provides a quantity of individual portions (2) that minimizes the frequency of replacement of cartridge (3) and does not imply dimensions of cartridge (3) of difficult handling by a user, as well as simultaneously maximizes the efficacy of use of packaging materials and minimizes costs of the associated logistics.

Moreover, it is preferred when the cartridge casing (31) and the portions support (1) are configured so that the total volume occupied by the collection confinements (130), is at least 50% of the interior volume of the cartridge casing (31). That is: sum V₁₃ / V₃ > 0,5. It is preferred when the total volume occupied by the collection confinements (130), is at least 40%, preferentially at least 50%, particularly preferentially at least 60% of the interior volume of the cartridge casing (31).

Moreover, it is advantageous when the free spaces between collection confinements (130) present a volume that is smaller than the volume of the collection confinements (130), preferentially smaller than half the volume thereof.

It is herewith provided a greater usage of collection and transport volumes, and greater efficacy of use of packaging materials.

Moreover, it is preferred when the volume occupied by each individual portion (2) corresponds to at least 80%, preferentially at least 90% of the volume confined by the collection confinements (130), so that the total volume occupied by the individual portions (2) corresponds to at least 40%, preferentially at least 50%, particularly preferentially at least 60% of the interior volume of the cartridge casing (31).

The cartridge casing (31) and the portions support (1) are advantageously provided so that the sum of the individual volume of the collection confinements (130), preferentially at least of the collection confinements (130) disposed underneath an exit opening (32) of the cartridge casing (31), is at least 60%, preferentially at least 70%, particularly preferentially at least 80% of the interior volume of the cartridge casing (31).

The disposition of the portions support (1) can also contribute to increase the self-porting capacity of the cartridge (3).

It is preferred when the portions support (1) is disposed so that the collection confinements (130) of at least part of the vertical alignments occupy at least 90%, preferentially at least 95% of the height (H₃) of the cartridge casing (31), whereby it is preferred when the top row includes collection confinements (130) at a free distance from the top wall of the cartridge casing (31) that is at least one time, preferentially is comprised between one time and three times, particularly preferentially at most two times the height (H₃₀) of the collection confinements (130).

It is further preferred when the collection confinements (130) occupy a fraction of between 0.70 and 0.90 of the part of the interior space that is free along the width (W₃) of the cartridge casing (31), whereby it is preferred when the width (W₃) is at least approximately similar to the characteristic connection dimension (Q₄) or smaller than 1.30 times, preferentially smaller than 1.20 times the characteristic collection dimension (Q₃₀), so that the free lateral margins of the portions support (1) are folded upwards or downwards inside the cartridge casing (31).

In what refers to the structural aspects of the cartridge (3), it is preferred when the portions support (1) includes collection confinements (130) that present two mutually opposite plane surfaces that extend transversally to the direction of a central symmetry axis of the individual portions (2).

Moreover, according to one aspect, the collection confinements (130) in direct seating upon the base wall of the cartridge casing (31) present a total extension, preferentially together with the area of the connection regions (140) of the collection confinements (130), bigger than the total extension in height of the collection confinements (130) inside the cartridge casing (31).

Moreover, it has been demonstrated as advantageous in terms of structural resistance and equilibrium when the cartridge (3) comprises a portions support (1) disposed so that presents an uneven number of vertical alignments, whereby it is preferred when the number of collection confinements (130) in each row is equal or bigger than the number of collection confinements (130) along a vertical alignment of collection de confinements (130).

Further in this sense, it is preferred when the cartridge (3) comprises a portions support (1) disposed so that both the vertical alignments disposed in opposite front and back sides of the zigzag disposition include collection confinements (130) that sit directly upon the base wall of the cartridge casing (31).

Moreover, in what regards more advantageous dimensions in structural and operative terms, it is advantageous when the cartridge (3) comprises a portions support (1) disposed so that each row presents at least 5, preferentially at least 7 collection confinements (130) and at most 11 collection confinements (130).

It is further preferred when the cartridge (3) comprises a portions support (1) disposed so as to form at least one of: at least 10 rows and at least and at least 11 vertical alignments of collection confinements (130), and at least 11 rows and at least 10 vertical alignments of collection confinements (130).

Alternatively, the cartridge (3) can comprise a portions support (1) disposed so as to form at least 3 rows of collection confinements (130) and at least 11 vertical alignments of collection confinements (130).

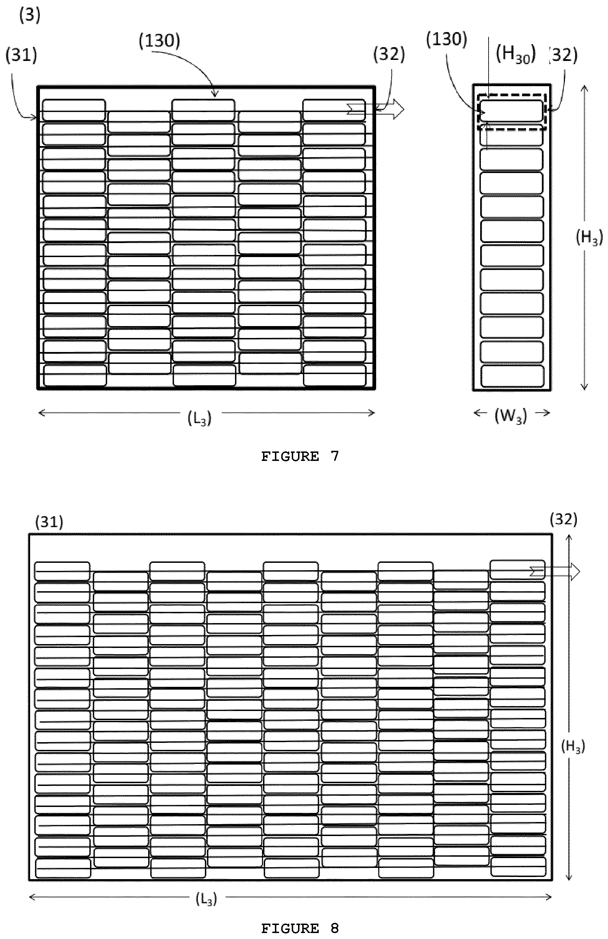

As can be further observed in the top view of Figure 7, the cartridge (3) comprises a portions support (1) disposed so that the sum of the lateral projections of the collection confinements (130) corresponds to at least 90% of the area of the lateral wall of the cartridge casing (31), and the sum of the frontal projections of the collection confinements (130) corresponds to at least 90%, preferentially at least 95% of the area of the frontal wall of the cartridge casing (31).

It is advantageous when the cartridge casing (31) and the portions support (1) are provided so that the most part of the exterior area of a most part of the collection confinements (130) results in direct contact with the exterior area of other collection confinements (130), whereby it is preferred when the total volume occupied by the collection confinements (130), is at least 50%, preferentially at least 60% and at most 90% of the interior volume of the cartridge casing (31).

It is further advantageous when the cartridge casing (31) and the portions support (1) are provided with respective widths (W₃) and (W₁) so that at least one, preferentially both of the lateral edges of the portions support (1), relative to the collection confinements (130) and along the length thereof (L₃), are laterally supported on the longitudinal lateral walls of the cartridge casing (31), whereby it is preferred when the lateral edges of the portions support (1) next to the connection regions (14) are not laterally tensioned by the longitudinal lateral walls of the cartridge casing (31).

Applicant has experimentally determined that it is advantageous when the portions support (1) presents a length (L₁) comprised between 50 and 200 times the step (p), preferentially between 60 and 120 times, so that there is provided flexibility of operation both in terms of the number of times when it is necessary to replace the cartridge (3), and in terms of the dimension and weight thereof to a user.

Moreover, it has been further experimentally determined that it is advantageous when the portions support (1) comprises support sheets (11, 12) provided in a material, preferentially of the cardboard type or similar, that presents a resistance of rupture to traction along the longitudinal direction of at least 2 kg, preferentially of at least 4 kg, particularly preferentially of at least 6 kg.

In terms of dimension, it is advantageous when the cartridge (3) presents at least one of:
- a portions support (1) with at least 60, preferentially at least 80 collection confinements (130), and preferentially at most 100 collection confinements (130);
- a portions support (1) with a total weight that is smaller than 500 g, preferentially smaller than 450 g, in the case of 60 individual portions (2), and a proportional total weight in the case of bigger number of individual portions (2) ;
- a portions support (1) with a total weight does not exceed 1,5 kg, preferentially does not exceed 1 kg;
- a cartridge casing (31) with a weight smaller than 20%, preferentially smaller than 15%, particularly preferentially smaller than 10% of the total weight of the cartridge (3);
- a total weight of cartridge (3) comprised between 0,35 kg and 1,5 kg, preferentially between 0,40 kg and 1,25 kg, particularly preferentially between 450 and 1 kg.

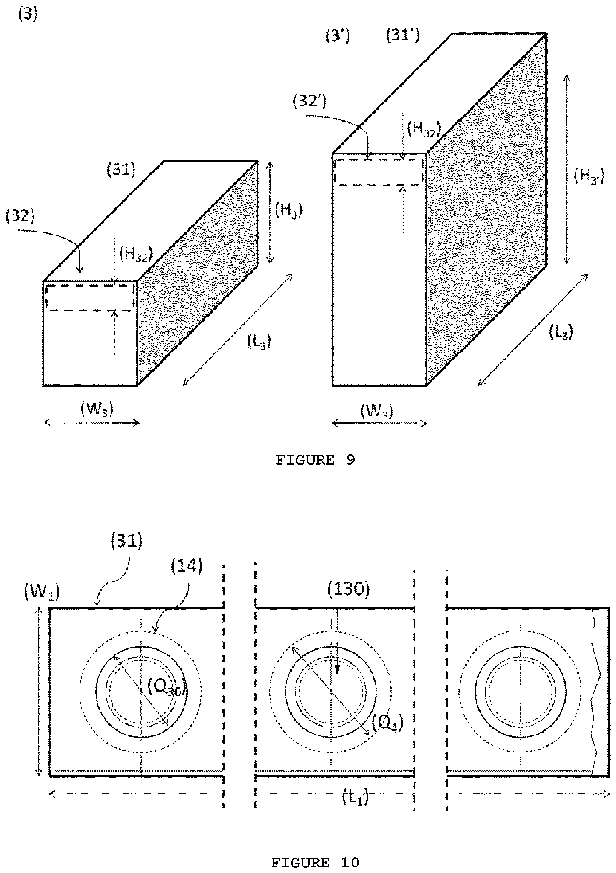

**Figure 9** represents two types of cartridge (3, 3') according to the present invention.

A beverage preparation system according to the present invention can comprise at least two types of cartridges (3, 3') that present cartridge casings (31, 31') with two at least approximately equal characteristic dimensions, including at least the width (W₃) and preferentially further the length (L₃), and differing in the height (H₃).

It is preferred when the height (H₃, H_{3'} ) of two types of different cartridges varies in linear manner with the number of collection portions (13) of the portions support (1) collected inside the cartridge (3).

According to another aspect, it is advantageous when the cartridge casing (31) presents an exit opening (32) disposed only on the frontal wall and non-adjacent to the top wall of the cartridge casing (31). It is further preferred when the exit opening (32) extends approximately at the entire width of the cartridge casing (31) and unobstructed along a height (H₃₂) comprised between 1,1 and 2,5 times, preferentially between 1,4 and 2 times the height (H₃₀) of the collection confinements (130).

It is herewith provided a better conduction of the portions support (1) out of the cartridge casing (31).

Moreover, it is advantageous when the cartridge casing (31) presents one of:
- a ratio between length (L₃) and height (H₃) bigger than 1.00:1, whereby it is preferred when it is at most 2.50:1, preferentially at most 1.50:1,
- a ratio between length (L₃) and height (H₃) smaller than 1.00:1, whereby it is preferred when it is at least 0.70:1, preferentially at most 0.80:1.

In terms of dimensional optimisation, it is further advantageous when the cartridge casing (31) presents at least one of:
- a length (L₃) that is at least approximately a divisor of 8 of the length (L₁) of the portions support (1);
- a height (H₃) that is at least approximately a multiple of 11 of the height (H₃) of the collection confinements (130).

Moreover, further in dimensional terms, it is preferred when the cartridge casing (31) presents at least one of:
- a length (L₃) comprised between 300 and 700 mm, preferentially between 400 and 600 mm;
- a width (W₃) comprised between 60 mm and 80 mm, preferentially between 65 mm and 75 mm;
- a height (H₃) comprised between 100 mm and 500 mm, preferentially between 150 and 250 mm.

It is herewith enabled that the cartridge casing (31) can be handled with only one hand and/or be held by any of the top, frontal and back portions thereof.

The weight of the cartridge (3) is another relevant parameter in terms of ergonomic handling thereof. The expert shall recognise that the material of the cartridge casing (31) and the number of individual portions (2) of the portions support (1) largely determine the weight of the cartridge (3).

According to one aspect, the cartridge casing (31) can present a weight that corresponds to less than 30% of the total weight of the cartridge (3), preferentially less than 20% of the total weight of the cartridge (3), whereby the cartridge casing (31) is preferentially provided in a material and construction that presents a resistance to rupture when submitted to a force of traction of at least 6 kg, preferentially of at least 4 kg.

The cartridge casing (31) can be configured so that does not provide sealing of its interior space to air.

It is preferred when the cartridge casing (31, 31') is provided in a single material, preferentially bio-compostable, such as for example cardboard, corrugated cardboard or similar.

It is preferred when the cartridge casing (31, 31') is provided in a single piece obtained from folding of a base shape cut-off from a construction material and configured so that can be collapsed in a planar format and that can be mounted in a self-porting manner.

The two types of cartridge casings (31, 31') can differ in at least one of: construction material, grammage of the construction material, shape of cut-off, colour or any other indicia associated with the exterior of said cartridge casing (11, 11').

**Figure 10** represents a top view of the base wall of the cartridge casing (31) and of the row furthers upstream of the portions support (1), relative to the exit opening (32).

It has been demonstrated as advantageous when the collection confinements (130) present mutually opposite surfaces and that thereby the furthest upstream row of the portions support (1) presents a plurality of plane areas of collection confinements (130) directly seating upon the base wall of the cartridge casing (31).

Moreover, it has been demonstrated advantageous when the furthest upstream row of the portions support (1) comprises at least five, preferentially at least seven, particularly preferentially at least nine collection confinements (130).

It is preferred when the total area of the collection confinements (130) directly seating upon the base wall corresponds to at least 30%, preferentially at least 40% of the total area of the base wall.

According to another aspect, it is particularly advantageous, when the collection confinements (130) present mutually opposing plane surface and the sum of the plane surfaces of the collection confinements (130) corresponds to at least 30%, preferentially to at least 40% of the area of the base wall of the cartridge casing (31) and the collection confinements (130) of at least another row sit directly upon upwards-oriented surfaces of the collection confinements (130) of the furthest upstream row.

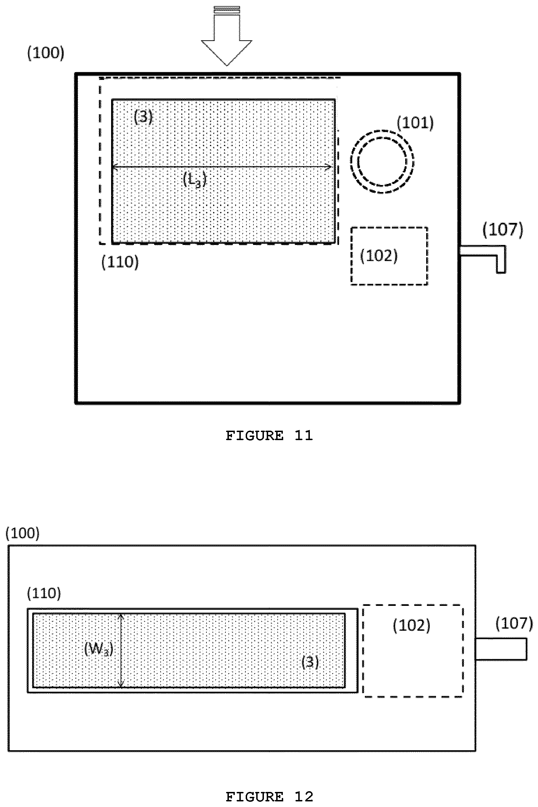

**Figures 11** and **12** represent preferred embodiments of a beverage preparation system that includes a cartridge (3) configured so that can be operatively associated with a beverage preparation machine (100) according to the invention.

As represented, the system can be configured so that the cartridge (3) is entirely (Figures 11 and 12), or at least partially collected (Figure 13 and 14), preferentially at least the most part of the volume of the cartridge (3), inside the volume of the beverage preparation machine (100).

According to one aspect better represented in Figures 11 and 12, the cartridge (3) can be operatively associated with the collection disposition (110) so that both of the longitudinal lateral walls of the cartridge (31) result at least in the proximity, preferentially in direct contact with the longitudinal lateral walls of a collection disposition (110), whereby both of the lateral walls of the collection disposition (110) preferentially present a collection length that is bigger than the length (L₃) of the cartridge casing (31), and preferentially also a collection height that is bigger than the height (H₃) of the cartridge casing (31).

Moreover, according to an advantageous aspect, the system is configured so that the cartridge (3) can be operatively associated with the collection disposition (110) so that both of the base and top walls result at least in the proximity, preferentially in direct contact with the base and top walls, respectively, of a collection disposition (110).

It is preferred when the with of the collection disposition (110) does not exceed the width (W₃) of the cartridge casing (31) by more than 10%, preferentially by more than 5%.

## Claims

1. Cartridge for supplying individual portions (2) of an edible substance to a beverage preparation machine (100), and comprising:
- a cartridge casing (31) with a height (H₃) and a length (L₃), and an exit opening (32) in the cartridge casing (31),
- a flexible and elongated portions support (1) with a plurality of collection confinements (130) with a height (H₃₀) and a characteristic collection dimension (Q₃₀) confining the individual portions (2), disposed successively distanced by a step (p) along the direction of length (L₁) of the portions support (1),
**characterized**
**in that** the portions support (1) presents at least 50 collection confinements (130) distanced from each other by a step (p) that is equal or bigger than the characteristic collection dimension (Q₃₀) of the collection confinements (130).

2. Cartridge according to claim 1,
**characterized**
**in that** the cartridge casing (1) and the portions support (1) are provided so that the most part of the collection confinements (130) is disposed in intercalated manner in the spaces between collection confinements (130) of rows directly above and underneath, whereby the collection confinements (130) preferentially present a ratio between characteristic collection dimension (Q₃₀) and collection height (H₃₀) comprised between 3.0:1 and 6.0:1, preferentially between 3.5:1 and 5.0:1, whereby the characteristic collection dimension (Q₃₀) is preferentially comprised between 30 and 45 mm, particularly preferentially between 35 and 40 mm,
and/or
**in that** the cartridge casing (1) and the portions support (1) are provided so that an extension corresponding to at least approximately half the height (H₃₀) of collection confinements (130) is intercalated within the extensions of step (p) and in between at least approximately half the height (H₃₀) of successive collection confinements (130) upstream.

3. Cartridge according to claim 1 or 2,
**characterized**
**in that** the cartridge casing (1) and the portions support (1) are provided so that the total extension of the collection confinements (130) that directly sits upon the base wall of the cartridge casing (31) is equal or bigger than the total extension of collection confinements (130) in height inside the cartridge casing (31),
and/or
**in that** the cartridge casing (1) and the portions support (1) are provided so that successive collection confinements (130) are disposed at less than half the step (p), preferentially next to other collection confinements (130), along the direction of the length (L₃) of the portions support (1), whereby it is preferred when collection confinements (130) in different rows provide vertical alignments of ones directly sitting upon others along the direction of the height (H₃) of the cartridge casing (31).

4. Cartridge according to any of claims 1 to 3,
**characterized**
**in that** the cartridge casing (31) and the portions support (1) are provided so that the most part of the exterior area of a most part of the collection confinements (130) is in direct contact with the exterior area of other collection confinements (130), whereby it is preferred when the total volume occupied by the collection confinements (130), is at least 50%, preferentially at least 60% and at most 90% of the interior volume of the cartridge casing (31),
and/or
**in that** the cartridge casing (31) and the portions support (1) are provided with respective widths (W₃) and (W₁) so that at least one, preferentially both of the lateral portions of the portions support (1), relative to the collection confinements (130) and along the length (L₃) thereof, are laterally supported on the longitudinal lateral walls of the cartridge casing (31), whereby it is preferred when the lateral portions of the portions support (1) are not laterally deflected by the longitudinal lateral walls of the cartridge casing (31).

5. Cartridge according to any of claims 1 to 4,
**characterized**
**in that** the cartridge casing (31) presents an exit opening (32) that extends according at least to one of:
- only on the frontal wall and non-adjacent to the top wall of the cartridge casing (31), and
- to at least approximately the entire width (W3) between longitudinal lateral walls of the cartridge casing (31) thereof,
whereby the exit opening (32) preferentially presents a height of unobstructed opening comprised between 1,1 and 4 times, preferentially between 1,4 and 3 times the height (H₃₀) of the collection confinements (130).

6. Cartridge according to any of claims 1 to 5,
**characterized**
**in that** the cartridge casing (31) presents one of:
- a ratio between length (L₃) and height (H₃) comprised between 1.00:1 and 2.50:1, preferentially comprised between 1.10:1 and 1.50:1,
- a ratio between length (L₃) and height (H₃) comprised between 0.70:1 and 1.00:1, preferentially between 0.71:1 and 0.90:1,
and/or
**in that** the cartridge casing (31) and the portions support (1) are provided so that present at least one of:
- a cartridge casing (31) provided so that sustain a portions support (1) with a total weight comprised between 200 g and 1,5 kg, preferentially between 250 g and 1 kg;
- a cartridge casing (31) provided so that represents less than 20%, preferentially less than 15% of the total weight of the cartridge (3).

7. Cartridge according to any of claims 1 to 6,
**characterized**
**in that** the portions support (1) is collected inside the cartridge casing (31) so that presents at least one of:
- at least 10 rows and at least 11 vertical alignments of collection confinements (130), and
- at least 11 rows and at least 10 vertical alignments of collection confinements (130),
and/or
**in that** the portions support (1) is collected inside the cartridge casing (31) so that presents at least 3 rows of collection confinements (130) within the height (H₃) and at least 11 vertical alignments of collection confinements (130) within the length (L₃) of the cartridge casing (31).

8. Cartridge according to any of claims 1 to 7,
**characterized**
**in that** the portions support (1) presents a length (L₁) comprised between 50 and 200 times the step (p), preferentially between 60 and 120 times the step (p),
and/or
**in that** the portions support (1) comprises support sheets (11, 12) provided in a material that presents a resistance to rupture by traction along the longitudinal direction of a least 2 kg, preferentially of at least 4 kg, particularly preferentially of at least 6 kg.

9. Cartridge according to any of claims 1 to 8,
**characterized**
**in that** the portions support (1) presents a ratio between the step (p) and the characteristic collection dimension (Q₃₀) comprised between 2.01:1 and 2.20:1, preferentially between 2.05:1 and 2.15:1, so that in a zigzag disposition of the portions support (1), a first set of collection confinements (130) can be retained between a second set of collection confinements (130) upstream from the first set.

10. Cartridge according to any of claims 1 to 9,
**characterized**
**in that** the portions support (1) is disposed inside the cartridge casing (31) so that configures vertical alignments whereby the base regions of the collection confinements (130) of a row sit directly and vertically aligned upon the top regions of collection confinements (130) of another row, preferentially along at least the most part of the characteristic collection dimension (Q₃₀) thereof.

11. Cartridge according to any of previous claims,
**characterized**
**in that** the portions support (1) is disposed inside the cartridge casing (31) so that presents an uneven number of vertical alignments and the number of collection confinements (130) in each row is equal or bigger than the number of collection confinements (130) along a vertical alignment of collection confinements (130),
and/or
**in that** the portions support (1) is disposed inside the cartridge casing (31) so that both the vertical alignments disposed on the top and front edges of the zigzag disposition include collection confinements (130) that sit directly upon the base wall of the cartridge casing (31).

12. Cartridge according to any of previous claims,
**characterized**
**in that** the portions support (1) is disposed inside the cartridge casing (31) so that the lateral walls (15) of collections confinements (130) of neighbouring vertical alignments result laterally aligned in extensions of half the height (H₃₀) of the collection confinements (130) and according to one of:
- adjacent and so that do not support each other laterally;
- at a distance to each other smaller than half the height (H₃₀) of the collection confinements (130).

13. Cartridge according to any of previous claims,
**characterized**
**in that** the portions support (1) is disposed inside the cartridge casing (31) so that the height occupied by three successive rows is equal or smaller than 2,5 times the height (H₃₀) of the collection confinements (130).

14. Cartridge according to any of previous claims,
**characterized**
**in that** the portions support (1) is disposed inside the cartridge casing (31) so that collection confinements (130) of a row are vertically aligned with collection confinements (130) of a second row respectively above and/or underneath, thereby forming vertical alignments whereby collection confinements (130) sit in direct contact and in a most part of respective downwards-oriented base region, upon collection confinements (13) of a second row underneath.

15. System for preparing beverages comprising:
- a beverage preparation machine (100),
- a cartridge (3, 3') for supplying individual portions (2),
whereby the machine (100) presents a collection disposition (110) adapted for collecting cartridges (3, 3'), and an actuation device (101) provided so that can move a portions support (1) through an exit opening (32) of the cartridge casing (31) and a plurality of individual portions (2) is successively supplied to an extraction device (102),
whereby the cartridge (3) can be operatively associated with the beverage preparation machine (100) retained in a collection disposition (110) thereof,
**characterized**
**in that** the cartridge (3) is operatively associated with the collection disposition (110) so that both of the longitudinal lateral walls of the cartridge casing (31) result in the proximity of the longitudinal lateral walls of a collection disposition (110) confined by the casing of machine (100), whereby both lateral walls of the collection disposition (110) present a collection length bigger than the length (L3), and preferentially a collection height that is equal or bigger than the height (H3) of the cartridge casing (31), so that both the lateral walls of the collection disposition (110) provide lateral support of at least most part of the exterior surface of the cartridge casing (31).
